# EUROPÄISCHE PATENTSCHRIFT

(11) **EP 2 205 851 B1**
(45) Veröffentlichungstag und Bekanntmachung des Hinweises auf die Patenterteilung: **18.01.2012**
(21) Anmeldenummer: 08804630.5
(22) Anmeldetag: 24.09.2008
(51) Int. Cl.: F02M 37/10, F02M 37/22

(54) **AKUSTIKOPTIMIERTE FLÜSSIGKEITSLEITUNG**
ACOUSTICALLY OPTIMISED FLUID LINE
CONDUIT DE LIQUIDE À OPTIMISATION ACOUSTIQUE

(30) Priorität: 26.09.2007 DE 102007046256
(43) Veröffentlichungstag der Anmeldung: 14.07.2010
(73) Patentinhaber: Continental Automotive GmbH, 30165 Hannover (DE)
(72) Erfinder: KADLER, Matthias, 64521 Gross-Gerau (DE); ECK, Karl, 60318 Frankfurt (DE); HAGIST, Dieter, 56112 Lahnstein (DE)
(86) Internationale Anmeldenummer: PCT/EP2008/062717
(87) Internationale Veröffentlichungsnummer: WO 2009/043764

(56) Entgegenhaltungen:
- EP-A- 1 231 377
- JP-A- 2 185 659
- JP-A- 8 200 175
- JP-A- 11 148 434

## Beschreibung

Die Erfindung betrifft eine akustikoptimierte Flüssigkeitsleitung zum Transport von Flüssigkeit zwischen einer Pumpe und einem Pumpenvorfilter. Die Erfindung betrifft außerdem eine Kraftstofffiltereinheit sowie eine Kraftstoffpumpeneinheit mit der akustikoptimierten Flüssigkeitsleitung.

Kraftstofffördereinheiten zur Beförderung des Kraftstoffs vom Tank zum Motor sind gewöhnlich im Tank eines Kraftfahrzeugs untergebracht. Wesentliche Bestandteile einer solchen Kraftstofffördereinheit sind eine Kraftstoffpumpe, ein Pumpenvorfilter sowie ein Schwalltopf, in welchem die Kraftstoffpumpe angeordnet ist, so dass auch bei Fahrt durch eine Kurve oder bei Schräglage des Fahrzeugs die Pumpe nicht trocken läuft.

Der Vorfilter ist der Kraftstoffpumpe vorgeschaltet. Er filtert den Kraftstoff bevor er von der Pumpe zum Motor gepumpt wird. Ein solcher Pumpenvorfilter kann im Boden des Schwalltopfs angeordnet sein, so dass die Pumpe den Kraftstoff durch den Vorfilter im Boden des Schwalltopfes hindurchpumpt. Problematisch bei einer solchen Anordnung ist jedoch, dass als Filterfläche ausschließlich die Bodenfläche des Schwalltopfes zur Verfügung steht. Dieses Konzept ist daher nur für kleinere Motoren geeignet.

Alternativ können sowohl Pumpe als auch der Pumpenvorfilter im Inneren des Schwalltopfes angeordnet sein. Normalerweise steht in diesem Falle die Pumpe, die meistens eine längliche Form hat, senkrecht zum Boden des Schwalltopfes im Schwalltopf. Die Einsaugöffnung der Pumpe ist in dieser Anordnung normalerweise im unteren Bereich des Schwalltopfes in der Nähe seines Bodens angeordnet. Der Vorfilter und der Einlass der Pumpe sind über eine Flüssigkeitsleitung miteinander verbunden. Der Kraftstoff strömt aus dem Pumpenvorfilter hinaus, wird dann von der Flüssigkeitsleitung in einem Kanal geleitet, um dann unterhalb der Pumpe, im Wesentlichen senkrecht nach oben in die Pumpe geleitet zu werden. Der Pumpenvorfilter kann in seiner Form an die Platzgegebenheiten im Schwalltopf angepasst sein.

Die Erfindung findet in letzterer Anordnung Anwendung, in welcher der Vorfilter nicht im Boden des Schwalltopfes angeordnet ist.

Kraftstoffpumpen können auf verschiedene Weise arbeiten. Benzinpumpen können Quelle von hörbaren und störenden Geräuschen im Kraftfahrzeug sein. Durch den Pumpvorgang stößt nämlich die Kraftstoffpumpe Druckwellen aus ihrer Ansaugöffnung ab, die andere Teile der Kraftstofffördereinrichtung zur Resonanz anregen können. Dies führt zu einem störenden Geräusch im Kraftfahrzeug.

In Kraftstofffördereinheiten, in denen die Kraftstoffpumpe, wie oben beschrieben, im Wesentlichen senkrecht zum Boden des Schwalltopfes angeordnet ist, und der Pumpenvorfilter nicht im Boden des Schwalltopfes angeordnet ist, können solche Geräusche unter anderem in der den Pumpenvorfilter mit der Pumpe verbindenden Flüssigkeitsleitung entstehen oder verstärkt werden. Diese Flüssigkeitsleitungen sind nämlich so ausgestaltet, dass die Pumpe an einem Pumpenanschluss angeordnet ist, der normalerweise zylinderförmig ausgestaltet ist. An dem der Pumpe gegenüberliegenden Ende des Zylinders findet sich in Flüssigkeitsleitungen nach dem Stand der Technik eine Prallplatte. Da die Prallplatte der Ansaugöffnung der Pumpe gegenüberliegend angeordnet ist, treffen Druckwellen oder Druckstöße, die von der Pumpe aus der Ansaugöffnung abgegeben werden, direkt auf die Prallplatte. Diese wird dadurch zur Resonanz angeregt und erzeugt ein hörbares Geräusch.

Aus der JP11148434 A ist ein Vorfilter mit einem Dämpfungsbereich in Form einer Kammer mit einem gekapselten Luftvolumen bekannt, welches Druckpulsationen des Laufrades dämpfen soll. Aus der JP 08200175 A ist ein Vorfilter mit einem Dämpfungsbereich in Form von zwei Dämpfungskammern bekannt, welche einen größeren Querschnitt als die Verbindung des Vorfilters mit der Kraftstoffpumpe aufweisen. Die Ausgestaltungen haben den Nachteil, dass die Vorfilter infolge der Kammern einen wesentlich größeren Bauraum bei gleicher Filterfläche beziehungsweise eine kleinere Filterfläche bei gleichem Bauraum besitzen.

Aufgabe der vorliegenden Erfindung ist es daher, eine Flüssigkeitsleitung zur Verbindung eines Vorfilters mit einer Kraftstoffpumpe anzugeben, in welchem die Größe des Kraftstofffilters nicht durch die Bodenfläche des Schwalltopfes begrenzt ist, die aber dennoch leise, d.h. ohne oder mit gegenüber dem Stand der Technik reduzierter Geräuschentwicklung, arbeitet.

Diese Aufgabe wird gelöst durch die Flüssigkeitsleitung nach Anspruch 1, die Kraftstofffiltereinheit nach Anspruch 10, die Kraftstoffpumpeneinheit nach Anspruch 11 sowie die Kraftstofffördereinheit nach Anspruch 12. Vorteilhafte Weiterbildungen der Flüssigkeitsleitung und der Kraftstofffördereinheit werden in den jeweiligen abhängigen Ansprüchen gegeben.

Erfindungsgemäß ist eine Flüssigkeitsleitung zum Transport von Flüssigkeit zwischen einem Pumpenvorfilter und einer Pumpe. Die Pumpe kann mit ihrer Ansaug- oder Ausstoßöffnung an einem Pumpenanschluss der Flüssigkeitsleitung angeschlossen werden. Dieser Pumpenanschluss ist mit einem flüssigkeitsdurchlässigen Kanal verbunden, an dessen anderer Seite ein Pumpenvorfilter angeschlossen werden kann. Hierzu kann der Kanal in einen Filteranschluss münden. Der Filteranschluss kann als einfache Öffnung ausgebildet sein oder weitere Teile zum Anschluss eines Filters aufweisen. Die Flüssigkeitsleitung kann auch als Bestandteil des Vorfilters, mit diesem in einem Stück verbunden, ausgebildet sein. Für eine einfache und kostengünstige Herstellung ist der Dämpfungsbereich als eine Öffnung im Boden, diesen durchstoßend, ausgebildet, in, vor oder über der der Filter, das Sieb oder die perforierte Fläche, diese vollständig abdeckend bzw. ausfüllend, angeordnet ist. Der Filter, das Sieb oder die perforierte Fläche sind also so angeordnet, dass Flüssigkeit, die die Öffnung durchströmt, auch den Filter, das Sieb bzw. die perforierte Fläche durchströmt.

Der Pumpenanschluss zum Anschluss einer Pumpe weist einerseits eine Pumpenanschlussöffnung auf, durch welche Kraftstoff von oder zur Pumpe fließt. Der Pumpenanschluss weist darüber hinaus einen Boden auf, der der Pumpenanschlussöffnung gegenüberliegend angeordnet ist. Die Pumpenanschlussöffnung liegt vorzugsweise in einer Ebene und kann zum Anschluss einer kreisförmigen Ansaug- oder Ausstoßöffnung kreisförmig gestaltet sein. Zugunsten einer einfachen Herstellbarkeit ist es bevorzugt, wenn auch der Boden einen kreisförmigen Rand hat. Der Boden kann, muss aber nicht eben sein und kann parallel zur Pumpenanschlussöffnung liegen. Der Durchmesser des Bodens ist vorzugsweise im Wesentlichen gleich dem Durchmesser der Pumpenanschlussöffnung. In diesem Fall weist der Pumpenanschluss vorzugsweise eine zylindrische Wandung zwischen Pumpenanschlussöffnung und Boden auf, die eine Öffnung für den Kanal hat.

Die Verminderung des durch die Pumpe abgegebenen Geräusches wird erfindungsgemäß nun dadurch erreicht, dass der Boden des Pumpenanschlusses zumindest einen Dämpfungsbereich aufweist, der Schwingungen dämpft, die in einer Flüssigkeit gegen diesen Bereich gerichtet sind, also auf diesen Bereich auftreffen. Schwingungen einer Pumpe, die im Wesentlichen in Richtung des Bodens abgegeben werden und auf diesen auftreffen, werden also von diesem Bereich gedämpft.

Für die Ausgestaltung des Bodens des Pumpenanschlusses und des Dämpfungsbereiches gibt es verschiedene Möglichkeiten, die die gewünschte Geräuschdämpfung erzielen. Als besonders wirkungsvoll haben sich Anordnungen herausgestellt, in denen der Dämpfungsbereich ganz oder bereichsweise als Filter, Sieb oder als perforierte Fläche ausgebildet ist. Um keinen Bypass zum Pumpenvorfilter zu erzeugen ist es vorteilhaft, wenn der Filter, das Sieb bzw. die perforierte Fläche eine Porenweite, eine Maschenweite bzw. eine Lochgröße aufweisen, die kleiner oder gleich der Porengröße bzw. Maschenweite des Pumpenvorfilters ist oder die zumindest den gleichen Abscheidegrad oder einen größeren Abscheidegrad als der Vorfilter aufweisen, der an die Flüssigkeitsleitung angeschlossen wird.

Um eine besonders kostengünstige Herstellung der erfindungsgemäßen Flüssigkeitsleitung zu ermöglichen kann der Filter, das Sieb und/oder die perforierte Fläche auf die Unter- oder Oberseite des Bodens aufgepresst, aufgeschweißt oder aufgeklebt sein. Besonders einfach herzustellen und daher bevorzugt ist auch ein Filter, der in die Öffnung einsteckbar ist und dort einrastet. Hierzu kann entlang des Randes der Öffnung eine Nut umlaufen, in welcher der Rand des Filters, des Siebes oder der perforierten Fläche einschnappt. Jede Möglichkeit einer kraftschlüssigen Verbindung kommt zur Befestigung infrage.

Neben oder anstelle eines Filters, Siebs oder einer perforierten Fläche kann der Dämpfungsbereich auch anders so gestaltet werden, dass er gegen ihn gerichtete Schwingungen dämpft. Entscheidend ist, dass der Dämpfungsbereich einen hydraulischen Widerstand aufweist, durch den die Schwingungsenergie gedämpft wird.

Von dem Pumpenanschluss zweigt der genannte flüssigkeitsdurchlässige Kanal ab. Er kann zwischen der Pumpenanschlussöffnung und dem Boden abzweigen oder aus dem Boden abzweigen. An seiner anderen Seite ist ein Pumpenvorfilter anschließbar. Der Kanal kann aber auch direkt in den Vorfilter führen, was auch als Anschließen des Filters verstanden wird.

Um eine möglichst platzsparende Anordnung von Kraftstoffpumpe und Pumpenvorfilter im Schwalltopf zu ermöglichen, kann die Flüssigkeitsleitung so ausgestaltet sein, dass der Kanal in einer Filteranschlussöffnung endet, die in einer Ebene liegt, die zu jener Ebene parallel ist, in der die Pumpenanschlussöffnung liegt. Die Lage der Filteranschlussöffnung hängt aber von der Form des Filters ab. Der Kanal der Flüssigkeitsleitung kann auch unmittelbar in den Filter münden.

Der Filter kann zylinderförmig sein und mit seiner Zylinderachse parallel zur Pumpe stehen. Der Filter kann aber auch als flacher Quader ausgeführt sein. Dieser kann mit seiner Fläche parallel zur Pumpe angeordnet sein. Er kann aber auch in seiner Fläche um 90° geknickt sein, so dass ein Teil seiner flächigen Seite parallel zum Boden des Schwalltopfes liegt und ein anderer Teil parallel zur Längsrichtung der Pumpe oder parallel zur Wand des Schwalltopfes. In diesem Fall kann eine Filteranschlussöffnung mit ihrer Fläche senkrecht zum Boden des Schwalltopfes oder zum Boden des Pumpenanschlusses stehen. Die Flüssigkeit durchströmt die Oberfläche dieses Quaders und wird durch den in das Innere des Quaders mündenden Kanal zur Pumpe geleitet. Ein flacher oder geknickter quaderförmiger Vorfilter kann besonders günstig herstellbar realisiert werden, wenn Filtergewebe oder Filtermaterial über eine Filtertragestruktur gespannt wird. Für eine Quaderform des Filters kann die Filtertragestruktur flächig ausgebildet sein, wobei aus der Fläche Abstandhalter mit im Wesentlichen konstanter Höhe hervorstehen, welche das Filtergewebe nach außen drücken und es dadurch in eine Quaderform spannen.

Für die Möglichkeit der platzsparenden Anordnung von Kraftstoffpumpe und Pumpenvorfilter ist es außerdem vorteilhaft, wenn der Kanal, welcher den Pumpenanschluss mit einem Vorfilter verbindet, mit seiner Durchflussrichtung in einer Ebene verläuft, die parallel zur Ebene der Pumpenanschlussöffnung oder zum Boden des Pumpenanschlusses liegt. Der Kanal kann verschiedene Querschnittsformen haben, er kann beispielsweise rechteckig oder kreisförmig oder elliptisch im Querschnitt sein.

Die erfindungsgemäße Flüssigkeitsleitung sowie die mit dieser Leitung ausgestattete erfindungsgemäße Kraftstofffiltereinheit und die erfindungsgemäße Kraftstoffpumpeneinheit ermöglichen eine platzsparende Anordnung auch großer Pumpenvorfilter in einem Schwalltopf gemeinsam mit der Kraftstoffpumpe. Zugleich werden hierbei die im Stand der Technik gegebenen Probleme der Geräuschentwicklung behoben. Dennoch wird die Filterung des Kraftstoffes hierbei nicht verschlechtert.

Im Folgenden soll die Erfindung anhand einiger Beispiele erläutert werden. Die Beispiele sind in keiner Weise beschränkend zu verstehen und die dort gezeigten Merkmale können auch in anderer Kombination in der erfindungsgemäßen Flüssigkeitsleitung sowie der Kraftstofffilter- bzw. Pumpeneinheiten zum Einsatz kommen. Entsprechende Merkmale werden mit gleichen Bezugszeichen gekennzeichnet.

Es zeigt
- Fig. 1: eine erfindungsgemäße Kraftstofffiltereinheit mit einer erfindungsgemäßen Flüssigkeitsleitung,
- Fig. 2: eine erfindungsgemäße Kraftstofffiltereinheit mit einer erfindungsgemäßen Flüssigkeitsleitung, wobei der Filter in seiner Fläche um 90° gebogen ist,
- Fig. 3: eine erfindungsgemäße Kraftstofffiltereinheit mit einer erfindungsgemäßen Flüssigkeitsleitung,
- Fig. 4: die Kraftstofffiltereinheit entsprechend Fig. 3 in der Seitenansicht, und
- Fig. 5: eine erfindungsgemäße Kraftstoffpumpeneinheit.

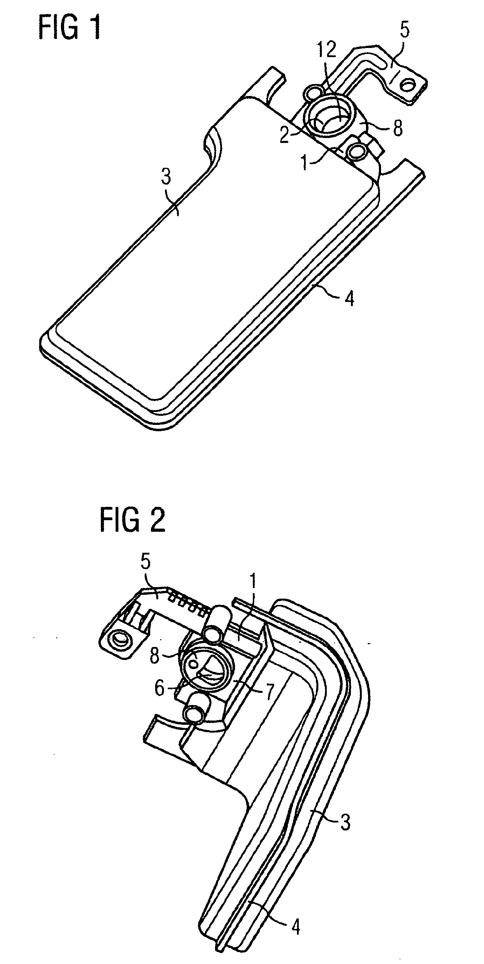

Fig. 1 zeigt eine erfindungsgemäße Kraftstofffiltereinheit mit einer Flüssigkeitsleitung 1, von welcher hier der Pumpenanschluss 8 zu sehen ist. Fig. 1 zeigt jene Seite der Kraftstofffiltereinheit, welche im in einen Schwalltopf eingebauten Zustand dem Boden des Schwalltopfes zugewandt ist. Vom im Wesentlichen zylinderförmigen Pumpenanschluss 8 ist daher der kreisförmige Boden 12 des Pumpenanschlusses 8 mit dem Dämpfungsbereich 2 zu sehen. An die Flüssigkeitsleitung 1 ist ein Pumpenvorfilter 3 angeschlossen, welcher im Wesentlichen als flächiger Quader ausgebildet ist. Unter einem flächigen Quader ist hierbei ein Quader zu verstehen, bei dem zwei zueinander parallele Flächen einen deutlich größeren Flächeninhalt haben als die anderen Seitenflächen des Quaders. Der Vorfilter 3 ist im gezeigten Beispiel auf eine Filtertragestruktur 4 aufgespannt. Die gezeigte Kraftstofffiltereinheit weist außerdem ein Halteelement 5 auf, mit welchem sie in einem Schwalltopf anbringbar ist.

Fig. 2 zeigt eine erfindungsgemäße Kraftstofffiltereinheit entsprechend Fig. 1. Gezeigt ist hierbei jedoch die in Fig. 1 nicht zu sehende Seite der Kraftstofffiltereinheit. Vom Pumpenanschluss 8 ist daher die Pumpenanschlussöffnung 6 zu erkennen. Der Pumpenanschluss 8 hat hier eine zylindrische Form, so dass die Pumpenanschlussöffnung 6 kreisförmig ist. Aus der Zylinderwand der Pumpenanschlussöffnung 6 geht ein flüssigkeitsdurchlässiger Kanal 7 ab, der den Pumpenanschluss 8 mit dem Vorfilter 3 verbindet. Der Filter 3 ist in Fig. 2 gegenüber dem in Fig. 1 gezeigten Pumpenvorfilter um einen Winkel von 90° um eine Achse geknickt bzw. gebogen, die senkrecht zur Zylinderachse des zylindrischen Pumpenanschlusses 8 und senkrecht zur Durchgangsöffnung des Kanals 7 liegt. Mit einem solchen geknickten Vorfilter 3 lässt sich die Kraftstofffiltereinheit auch in kleineren Schwalltöpfen anordnen. Eine Kraftstoffpumpe würde in Fig. 2 an die Pumpenanschlussöffnung 6 angeschlossen und stünde dann im Wesentlichen parallel zum abgeknickten Teil des Vorfilters 3.

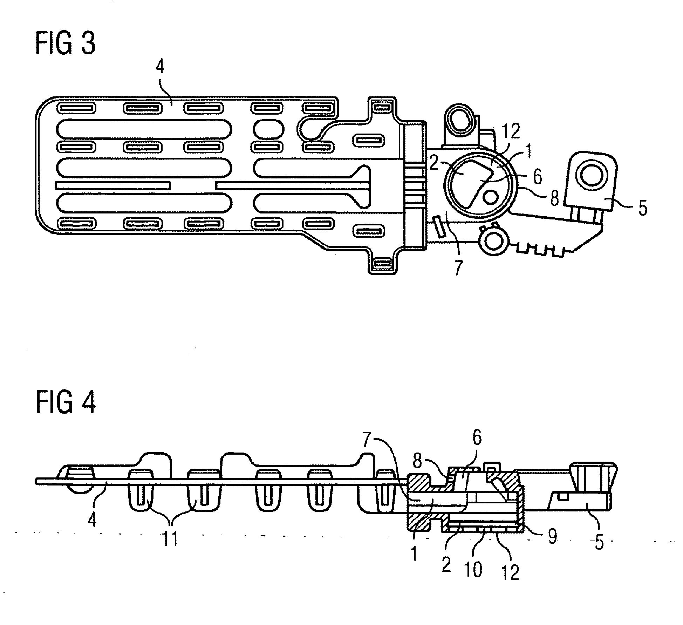

Fig. 3 zeigt eine erfindungsgemäße Kraftstofffiltereinheit mit einer erfindungsgemäßen Flüssigkeitsleitung 1. Im Gegensatz zu Fig. 1 und Fig. 2 wurde in Fig. 3 das Filtermaterial des Vorfilters 3 entfernt, so dass nur die Filtertragestruktur 4 zu erkennen ist. Fig. 3 zeigt die Kraftstofffiltereinheit in der Aufsicht, so dass eine Kraftstoffpumpe, die an der Pumpenanschlussöffnung 6 angeschlossen wäre, senkrecht nach oben aus der Zeichnungsebene herausstünde. Zu sehen ist der Pumpenanschlussstutzen 8 mit der dem Betrachter zugewandten Pumpenanschlussöffnung 6. Durch die Pumpenanschlussöffnung 6 hindurchblickend erkennt man auf der Rückseite des Pumpenanschlusses 8 den Boden 12 des Pumpenanschlusses 8 mit dem Dämpfungsbereich 2, in welchem beispielsweise ein Filter, ein Sieb oder eine perforierte Fläche angeordnet ist. Parallel zur Ebene des Bodens 12 geht seitlich durch die zylindrische Wand des Pumpenanschlusses 8 der Kanal 7 ab. An diesem ist an dessen anderem Ende die Filtertragestruktur 4 angebracht, über welcher das Filtermaterial gespannt wird. Die Filtertragestruktur 4 gibt hierbei den rechteckigen Querschnitt des Vorfilters 3 vor und erstreckt sich im Wesenlichten parallel zu den Hauptflächen des flächigen Pumpenvorfilters 3.

Fig. 4 zeigt die erfindungsgemäße Kraftstofffiltereinheit aus Fig. 3 in der Seitenansicht. Es ist zu erkennen, dass sich der Pumpenanschluss 8 nach oben der Pumpenanschlussöffnung 6 öffnet. Dieser unten gegenüberliegend angeordnet ist der Dämpfungsbereich 2, der hier als in eine Öffnung eingesetzter Filter ausgebildet ist. Der Filter 10 schnappt hierbei mit seinem Rand in eine Nut 9 ein, die in die Wandung des Pumpenanschlusses 8 jene Öffnung umlaufend, in welche der Filter 10 eingebracht ist, angeordnet ist. Zu erkennen ist, dass die erfindungsgemäße Flüssigkeitsleitung 1 neben dem Pumpenanschluss 8 einen Kanal 7 aufweist, welcher im gezeigten Beispiel seitlich aus der zylindrischen Wandung des Pumpenanschlusses 8 mit zum Boden 12 paralleler Durchflussrichtung abgeht. Dieser Kanal 7 verbindet den Pumpenanschluss 8 mit dem Inneren des Vorfilters 3, das durch die Filterhaltestruktur 4 aufgespannt wird. Diese weist dazu aus ihrer Fläche hervorstehende Vorstände 11 auf, welche den Vorfilter 3 im aufgespannten Zustand nach außen drücken. Die anderen gezeigten Elemente entsprechen den in den anderen Figuren gezeigten Elementen.

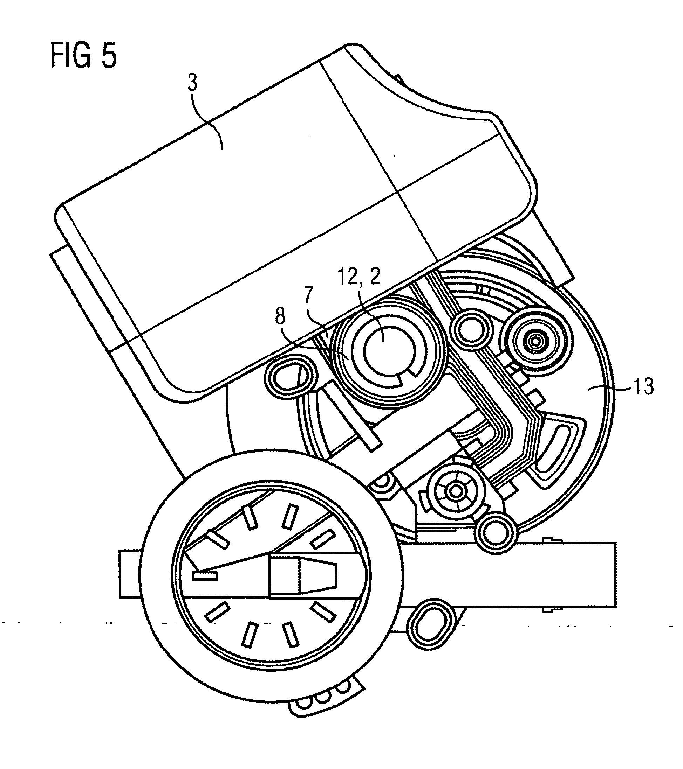

Figur 5 zeigt eine erfindungsgemäße Kraftstoffpumpeneinheit mit einer eingebauten erfindungsgemäßen Flüssigkeitsleitung 1 in der Ansicht von unten, also aus Richtung jener Seite, die im eingebauten Zustand dem Boden des Schwalltopfes zugewandt ist.

Die Kraftstoffpumpe 13 ist über den Pumpenanschluss 8 mit der erfindungsgemäßen Flüssigkeitsleitung 1 verbunden. Diese ist wiederum mit dem Pumpenvorfilter 3 verbunden. Kraftstoff wird hierbei aus dem Pumpenvorfilter 3 durch den Kanal 7 der Flüssigkeitsleitung 1 in die Pumpe 13 gleitet. Der Pumpenvorfilter 3 ist hier wie in Figur 2 gezeigt geknickt.

## Patentansprüche

1. Flüssigkeitsleitung (1) zum Transport von Flüssigkeit zwischen einem Vorfilter (3) und einer Pumpe, wobei die Flüssigkeitsleitung einen Pumpenanschluss (8) mit einer Pumpenanschlussöffnung (6) zum Anschluss einer Ansaug- oder Ausstoßöffnung einer Pumpe sowie einen der Pumpenanschlussöffnung gegenüberliegenden Boden (12) mit einer der Pumpenanschlussöffnung zugewandten Oberseite und einer der Pumpenanschlussöffnung (6) abgewandten Unterseite aufweist, und die Flüssigkeitsleitung (1) außerdem einen flüssigkeitsdurchlässigen Kanal (7) zur Verbindung des Pumpenanschlusses (8) mit einem Vorfilter (3) aufweist, wobei der Kanal an einem Ende in den Pumpenanschluss (8) mündet und an einem entgegengesetzten Ende an einen Vorfilter (3) anschließbar ist, dass der Boden (12) des Pumpenanschlusses (8) einen Dämpfungsbereich (2) zur Dämpfung von in Richtung des Bodens (12) abgestrahlten Schwingungen in einer Flüssigkeit aufweist, **dadurch gekennzeichnet, dass** der Dämpfungsbereich (2) eine Öffnung von der Oberseite zur Unterseite aufweist oder ist, die von einem Filter, Sieb und/oder einer perforierten Fläche ausgefüllt und/oder abgedeckt ist und/oder vor welcher ein Filter, ein Sieb und/oder eine perforierte Fläche so angeordnet ist, dass eine Strömung einer Flussigkeit durch die Öffnung zu einer Strömung der Flüssigkeit durch den Filter, das Sieb und/oder die perforierte Fläche führt.

2. Flüssigkeitsleitung nach Anspruch 1 , **dadurch gekennzeichnet, dass** der Filter, das Sieb und/oder die perforierte Fläche auf die Unter- oder Oberseite des Bodens (12) aufgepresst, aufgeschweißt oder aufgeklebt ist oder in eine Öffnung eingesetzt ist und dort eingerastet ist.

3. Flüssigkeitsleitung nach einem der Ansprüche 1 und 2, **dadurch gekennzeichnet, dass** der Filter, das Sieb und/oder die perforierte Fläche eine Maschenweite aufweisen, die kleiner oder gleich einer Maschenweite des Vorfilters (3) ist und/oder einen Abscheidegrad aufweisen, der größer oder gleich einem Abscheidegrad des Vorfilters ist.

4. Flüssigkeitsleitung nach einem der vorhergehenden Ansprüche, **dadurch gekennzeichnet, dass** der Kanal (7) zwischen der Pumpenanschlussöffnung und dem Boden (12) oder durch den Boden in den Pumpenanschluss (8) mündet.

5. Flüssigkeitsleitung nach einem der vorhergehenden Ansprüche, **dadurch gekennzeichnet, dass** die Flüssigkeitsleitung (1) eine Filteranschlussöffnung aufweist, die in einer Ebene liegt, die zu einer Ebene parallel ist, in der die Pumpenanschlussöffnung liegt und/oder sich in die gleiche Richtung öffnet wie die Pumpenanschlussöffnung.

6. Flüssigkeitsleitung nach einem der Ansprüche 1 bis 4, **dadurch gekennzeichnet, dass** die Flüssigkeitsleitung (1) eine Filteranschlussöffnung aufweist, die in einer Ebene liegt, die zu einer Ebene senkrecht steht, in welcher die Pumpenanschlussöffnung liegt und/oder die sich in einer Richtung senkrecht zu jener Richtung, in der sich die Pumpenanschlussöffnung öffnet, öffnet.

7. Flüssigkeitsleitung nach einem der vorhergehenden Ansprüche, **dadurch gekennzeichnet, dass** der Kanal (7) in einer Richtung parallel zu einer Ebene verläuft, in der sich die Pumpenanschlussöffnung (6) erstreckt.

8. Flüssigkeitsleitung nach einem der vorhergehenden Ansprüche, **dadurch gekennzeichnet, dass** der Kanal (7) zumindest bereichsweise einen rechteckigen Querschnitt aufweist.

9. Flüssigkeitsleitung nach einem der vorhergehenden Ansprüche, **dadurch gekennzeichnet, dass** der Querschnitt der Pumpenanschlussöffnung (6) kreisförmig ist.

10. Kraftstofffiltereinheit mit einer Flüssigkeitsleitung (1) nach einem der vorhergehenden Ansprüche und einem mit der Flüssigkeitsleitung verbundenen Vorfilter (3).

11. Kraftstoffpumpeneinheit mit einer Flüssigkeitsleitung (1) nach einem der Ansprüche 1 bis 9 und einer an dem Pumpenanschluss (8) der Flüssigkeitsleitung (1) angeschlossenen Kraftstoffpumpe.

12. Kraftstofffördereinheit mit einer Kraftstoffpumpe, einem Vorfilter (3) und einer Flüssigkeitsleitung nach einem der Ansprüche 1 bis 9, wobei die Kraftstoffpumpe mit einer Ansaug- oder Ausstoßöffnung an die Pumpenanschlussöffnung (6) der Flüssigkeitsleitung (1) angeschlossen ist und wobei der Vorfilter (3) an dem Ende des Kanals (7) der Flüssigkeitsleitung (1) angeschlossen ist, welches dem in den Pumpenanschluss (8) der Flüssigkeitsleitung (1) mündenden Ende des Kanals (7) entgegengesetzt ist.

13. Kraftstofffördereinheit nach dem vorhergehenden Anspruch, **dadurch gekennzeichnet, dass** die Kraftstoffpumpe und der Vorfilter (3) jeweils zumindest bereichsweise eine in einer Richtung längliche Form haben und mit diesen Richtungen im Wesentlichen parallel zueinander angeordnet sind.

## Claims

1. Fluid line (1) for transporting fluid between a pre-filter (3) and a pump, with the fluid line having a pump connection (8) with a pump connection opening (6) for connecting an intake or discharge opening of a pump, and having a base (12) which is situated opposite the pump connection opening and has an upper side, which faces toward the pump connection opening, and a lower side which faces away from the pump connection opening (6), and with the fluid line (1) also having a duct (7), through which fluid can pass, for connecting the pump connection (8) to a pre-filter (3), with the duct opening out at one end into the pump connection (8) and being able to be connected at an opposite end to a pre-filter (3), in that the base (12) of the pump connection (8) has a damping region (2) for damping vibrations, which are radiated in the direction of the base (12), in a fluid, **characterized in that** the damping region (2) has or is an opening from the upper side to the lower side, which opening is filled out and/or covered by a filter, a sieve and/or a perforated surface and/or upstream of which opening a filter, a sieve and/or a perforated surface is arranged such that a flow of a fluid through the opening leads to a flow of the fluid through the filter, the sieve and/or the perforated surface.

2. Fluid line according to Claim 1, **characterized in that** the filter, the sieve and/or the perforated surface is pressed, welded or adhesively bonded onto the lower side or upper side of the base (12) or is inserted into and latched in an opening.

3. Fluid line according to one of Claims 1 and 2, **characterized in that** the filter, the sieve and/or the perforated surface have a mesh size which is smaller than or equal to a mesh size of the pre-filter (3) and/or have a filtration efficiency which is higher than or equal to a filtration efficiency of the pre-filter.

4. Fluid line according to one of the preceding claims, **characterized in that** the duct (7) opens out into the pump connection (8) between the pump connection opening and the base (12) or through the base.

5. Fluid line according to one of the preceding claims, **characterized in that** the fluid line (1) has a filter connection opening which is situated in a plane parallel to a plane in which the pump connection opening is situated, and/or said filter connection opening opens in the same direction as the pump connection opening.

6. Fluid line according to one of Claims 1 to 4, **characterized in that** the fluid line (1) has a filter connection opening which is situated in a plane perpendicular to a plane in which the pump connection opening is situated, and/or said filter connection opening opens in a direction perpendicular to the direction in which the pump connection opening opens.

7. Fluid line according to one of the preceding claims, **characterized in that** the duct (7) runs in a direction parallel to a plane in which the pump connection opening (6) extends.

8. Fluid line according to one of the preceding claims, **characterized in that** the duct (7) has a rectangular cross section at least in regions.

9. Fluid line according to one of the preceding claims, **characterized in that** the cross section of the pump connection opening (6) is circular.

10. Fuel filter unit having a fluid line (1) according to one of the preceding claims and having a pre-filter (3) connected to the fluid line.

11. Fuel pump unit having a fluid line (1) according to one of Claims 1 to 9 and having a fuel pump connected to the pump connection (8) of the fluid line (1).

12. Fuel delivery unit having a fuel pump, having a pre-filter (3) and having a fluid line according to one of Claims 1 to 9, with the fuel pump being connected by means of an intake or discharge opening to the pump connection opening (6) of the fluid line (1) and with the pre-filter (3) being connected to that end of the duct (7) of the fluid line (1) which is situated opposite that end of the duct (7) which opens out into the pump connection (8) of the fluid line (1).

13. Fuel delivery unit according to the preceding claim, **characterized in that** the fuel pump and the pre-filter (3) each have an elongate shape in one direction at least in regions and are arranged with said directions substantially parallel to one another.

## Revendications

1. Conduit (1) pour du liquide pour le transport de liquide entre un préfiltre (3) et une pompe, le conduit pour du liquide comportant un raccord (8) de pompe ayant une ouverture (6) de raccord de pompe pour le raccordement d'une ouverture d'aspiration ou de refoulement d'une pompe ainsi qu'un fond (12) opposé à l'ouverture de raccord de pompe ayant une face supérieure tournée vers l'ouverture de raccord de pompe et une face inférieure éloignée de l'ouverture (6) de raccord de pompe, et le conduit (1) pour du liquide comporte en outre un canal (7) de transmission de liquide pour la communication du raccord (8) de pompe avec un préfiltre (3), le canal débouchant à une extrémité du raccord (8) de pompe et pouvant être raccordé à une extrémité opposée à un préfiltre (3), en ce que le fond (12) du raccord (8) de pompe a une zone d'amortissement pour l'amortissement d'oscillations dans un liquide se propageant en direction du fond (12), **caractérisé en ce que** la zone (2) d'amortissement a ou est une ouverture allant du côté supérieur au côté inférieur, qui est garnie et/ou recouverte d'un filtre, d'un tamis et/ou d'une surface perforée et/ou devant laquelle est disposé un filtre, un tamis et/ou une surface perforée, de manière à ce qu'un courant d'un liquide dans l'ouverture donne un courant du liquide à travers le filtre, le tamis et/ou la surface perforée.

2. Conduit pour du liquide suivant la revendication 1, **caractérisé en ce que** le filtre, le tamis et/ou la surface perforée est pressée, soudée ou collée sur la face inférieure ou la face supérieure du fond (12) où est inséré dans une ouverture et y est encliqueté.

3. Conduit pour du liquide suivant l'une des revendications 1 et 2, **caractérisé en ce que** le filtre, le tamis et/ou la surface perforée ont une dimension de maille, qui est inférieure ou égale à une dimension de maille du préfiltre (3) et/ou ont un degré de séparation qui, est supérieur ou égal à un degré de séparation du préfiltre.

4. Conduit pour du liquide suivant l'une des revendications précédentes, **caractérisé en ce que** le canal (7) débouche dans le raccord (8) de pompe entre l'ouverture de raccord de pompe et le fond (12) ou à travers le fond.

5. Conduit pour du liquide suivant l'une des revendications précédentes, **caractérisé en ce que** le conduit (1) pour du liquide comporte une ouverture de raccord de filtre, qui se trouve dans un plan qui est parallèle à un plan qui se trouve dans l'ouverture de raccord de pompe et/ou qui s'ouvre dans la même direction que l'ouverture de raccord de pompe.

6. Conduit pour du liquide suivant l'une des revendications 1 à 4, **caractérisé en ce que** le conduit (1) pour du liquide a une ouverture de raccord de filtre, qui est dans un plan qui est perpendiculaire à un plan dans lequel se trouve l'ouverture de raccord de pompe et/ou qui s'ouvre dans une direction perpendiculaire à la direction dans laquelle s'ouvre l'ouverture de raccord de pompe.

7. Conduit pour du liquide suivant l'une des revendications précédentes, **caractérisé en ce que** le canal (7) s'étend dans une direction parallèle à un plan dans lequel s'étend l'ouverture (6) de raccord de pompe.

8. Conduit pour du liquide suivant l'une des revendications précédentes, **caractérisé en ce que** le canal (7) a au moins par endroit une section transversale rectangulaire.

9. Conduit pour du liquide suivant l'une des revendications précédentes, **caractérisé en ce que** la section transversale de l'ouverture (6) de raccord de pompe est circulaire.

10. Groupe de filtre de carburant comprenant un conduit (1) pour du liquide suivant l'une des revendications précédentes et un préfiltre (3) communiquant avec le conduit pour du liquide.

11. Groupe de pompage de carburant comprenant un conduit (1) pour du liquide suivant l'une des revendications 1 à 9 et une pompe de carburant raccordée au raccord (8) de pompe du conduit (1) pour du liquide.

12. Groupe de transport de carburant, comprenant une pompe de carburant, un préfiltre (3) et un conduit pour du liquide suivant l'une des revendications 1 à 9, dans lequel la pompe de carburant est raccordée par une ouverture d'aspiration ou de refoulement à l'ouverture (6) de raccord de pompe du conduit (1) pour du liquide et dans lequel le préfiltre (3) est raccordé, à l'extrémité du canal (7), au conduit (1) pour du liquide, laquelle est opposée à l'extrémité du canal (7) débouchant dans le raccord (8) de pompe du conduit (1) pour du liquide.

13. Groupe de transport de carburant suivant la revendication précédente, **caractérisé en ce que** la pompe de carburant et le préfiltre (3) ont respectivement au moins par endroit une forme oblongue dans une direction et sont disposés par ces directions sensiblement parallèlement entre eux.
